(19) Europäisches Patentamt
European Patent Office
Office européen des brevets

(11) **EP 4 421 735 A1**

(12) **EUROPEAN PATENT APPLICATION**

(43) Date of publication:
**28.08.2024 Bulletin 2024/35**

(21) Application number: **23158293.3**

(22) Date of filing: **23.02.2023**

(51) International Patent Classification (IPC):
**G06T 7/12** (2017.01)  **G06T 7/174** (2017.01)
**G06T 7/136** (2017.01)  **G06T 7/11** (2017.01)

(52) Cooperative Patent Classification (CPC):
**G06T 7/11; G06T 7/136; G06T 7/174;**
G06T 2207/10081; G06T 2207/10104;
G06T 2207/10108; G06T 2207/20012;
G06T 2207/30061; G06T 2207/30096

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Institut National de la Santé et de la
Recherche Médicale (INSERM)
75013 Paris (FR)**
• **Centre Hospitalier Régional et Universitaire de
Brest
29200 Brest (FR)**

• **Universite Brest Bretagne Occidentale
29200 Brest (FR)**

(72) Inventors:
• **LE ROUX, Pierre-Yves
29470 PLOUGASTEL DAOULAS (FR)**
• **BOURHIS, David
29820 BOHARS (FR)**
• **LUCIA, François
29200 BREST (FR)**

(74) Representative: **Plasseraud IP
104 Rue de Richelieu
CS92104
75080 Paris Cedex 02 (FR)**

(54) **METHOD AND DEVICE FOR LUNG FUNCTIONAL CONTOURS DELINEATION ON FUNCTIONAL IMAGES**

(57) Method and device for delineating lung functional contours on functional images comprising :

(a) aligning an anatomical image and a functional image such that both images have corresponding coordinates;

(b) determining a lung anatomical contour on the anatomical image;

(c) transferring the lung anatomical contour on the functional image;

(d) obtaining the total radioactivity inside the lung anatomical contour "$A_0$";

(e) determining a functional contour on the functional image with a threshold k such that all pixels inside said functional contour have a pixel value higher than the threshold;

(f) obtaining the total radioactivity inside the functional contour "$A_k$";

(g) obtaining a functional value corresponding to the ratio between the total radioactivity inside the functional contour and the total radioactivity inside the anatomical contour;

(h) storing the function contour if its functional value has a functional value (FV) expected.

Figure 2

EP 4 421 735 A1

**Description**

**Technical Field**

The present disclosure concerns methods and devices for lungs functional volumes delineation on functional images.

**Background Art**

Radiation therapy (RT) is one of the primary modalities for treating lung tumors. However, the ionizing radiation which damage tumor cells leading to tumor death, effects on normal tissue surrounding the tumor region and may result in acute and/or late toxicity. The manifestation of toxicity depends on both cellular characteristics and affected organ's anatomy and functional activities.

Functional imaging techniques such as emission tomography, including single photon emission computed tomography (SPECT) and positron emission tomography (PET) make it possible to delineate regions with various degrees of lung function. The ability to delineate areas of high functioning lung allows for preferential sparing of the functioning lung in the RT planning process, nominally referred to as functional lung avoidance planning, with the aim of reducing pulmonary toxicity. This technique aims at personalizing RT planning to individual's pulmonary functional distribution, by prioritizing delivery of higher dose in non-functional pulmonary regions while functional areas. Thus, the delineation of functional lung volumes which is integrated as organ at risk into RT planification is a fundamental step. In other words, in order to use lung perfusion/ventilation imaging for functional lung avoidance RT, the method used to determine the lung functional volumes should be robust, reliable and reproducible.

One known method is based on a manual delineating of functional volumes on functional images. However, the result is tedious and associated with very low repeatability due to the poor quality of functional images in contrast. In addition, this method is poorly reproducible and time-consuming preventing its use in daily clinical practice. In addition, manual contouring requires experience in reading functional images.

To reduce the variability arising from manual segmentation, several automatic techniques were proposed to delineate lung functional volumes. One of the widely used technique is fixed threshold segmentation. In such technique, the intensity value related to the radioactive concentration in the functional image is used to delineate the functional region in the lungs. A conventional approach consists in using the maximum intensity extracted from a single pixel of the lungs. A fixed percentage of this maximum intensity measured in the functional images lungs is used to determine the fixed threshold Pmax. Pixels having intensity greater or equal to the fixed threshold Pmax are included in the segmented lung function region. Various fixed threshold expressed as a percentage of the maximal pixel value may be used on functional images to delineate the functional region. For instance, the percentage may be 10%, 20%, 30%, 40%, 50%, 60%, 70%, 80% and 90%. Thus, for each fixed threshold, a functional contour can be generated by assigning the pixels having an intensity greater than the fixed value in a region, with remaining pixels having an intensity below the threshold.

However, the value of the percentage is defined empirically and there is a wide variety of threshold used in the literature, ranging from 20% to 90% of the maximal value, providing an inconsistent large range of functional volumes which lead to a difficult clinical interpretation for physicians. In addition, the fixed threshold extracted from a single maximum pixel may lead to unreliable results caused by the presence of hot spots related to intense uptake in the lungs areas and the presence of high noise in functional images.

Therefore, there exists a need to provide a robust and reliable delineation method of functional contours which may be used for functional lung avoidance radiotherapy.

The invention aims at providing a fully automated, consistent and robust segmentation method, while providing clinically meaningful results for physicians.

Summary

To this end, the present disclosure proposes a method for delineating lung functional contours on functional images comprising :

(a) aligning an anatomical image and a functional image such that both images have corresponding coordinates;
(b) determining a lung anatomical contour on the anatomical image;
(c) transferring the lung anatomical contour on the functional image;
(d) obtaining the total radioactivity inside the lung anatomical contour "$A_0$";
(e) determining a functional contour on the functional image with a threshold k such that all pixels inside said functional contour have a pixel value higher than the threshold;

(f) obtaining the total radioactivity inside the functional contour "$A_k$";

(g) obtaining a functional value corresponding to the ratio between the total radioactivity inside the functional contour and the total radioactivity inside the anatomical contour;

(h) storing the function contour if its functional value has a functional value (FV) expected.

The following features, can be optionally implemented, separately or in combination one with the others:
The threshold k is a radioactive concentration value defined as a percentage of an intensity reference value measured inside the anatomical contour.

The steps (e), (f) and (g) are repeated by varying iteratively the threshold from 5% to 95%.

The functional contours are determined for expected functional values from 10% to 90%.

The anatomical image is a computer tomography image.

The step (c) comprises a step of semi-automatic or automatic segmentation to determine the anatomical contour on the anatomical image.

The functional image is a single photon emission computed tomography image or a positron emission tomography image.

In one embodiment, the intensity reference value may be an average intensity value over all pixels located within the anatomical contour.

In another embodiment, the intensity reference value is the maximum intensity value extracted from a single pixel located within the anatomical contour.

The present disclosure also concerns a device for delineating lungs functional volumes on a functional image, the device comprising:

an anatomical segmentation module adapted to:

- align an anatomical image and a functional image such that both images have corresponding coordinates;
- determine a lung anatomical contour on the anatomical image;
- transfer the lung anatomical contour on the functional image;

a functional segmentation module adapted to

- obtain the total radioactivity inside the anatomical contour $A_0$;
- determine a functional contour on the functional image with a threshold k such that all pixels inside said functional contour have a pixel value higher than the threshold;
- obtain the total radioactivity inside the functional contour $A_k$;
- obtain a functional value corresponding to the ratio between the total radioactivity inside the functional contour and the total radioactivity inside the anatomical contour;
- storing the functional contour if its functional value has a functional value (FV) expected.

In one or more embodiments, the threshold k is a radioactive concentration value defined as a percentage of an intensity reference value measured inside the anatomical contour.

In one embodiment, the intensity reference value may be the maximum intensity value extracted from a single pixel located within the anatomical contour.

In another embodiment, the intensity reference value may be an average intensity value over all pixels located within the anatomical contour.

In another aspect of the present disclosure, it is proposed a medical image apparatus, comprising an anatomical image device, a functional image device and the device for delineating lungs functional volumes as defined here.

In one embodiment, the medical image apparatus may further comprise a radiotherapy planification device configured to integrate the lungs functional contours transmitted by the device for integrating lungs functional volumes in the radiotherapy planning.

In another aspect, it is proposed a computer software comprising instructions to implement at least the method as defined here when the software is executed by a processor. In another aspect, it is proposed a computer-readable non-transient recording medium on which a software is registered to implement the method as defined here when the software is executed by a processor.

## Brief Description of Drawings

Other features, details and advantages will be shown in the following detailed description and on the figures, on which:

**Fig. 1**

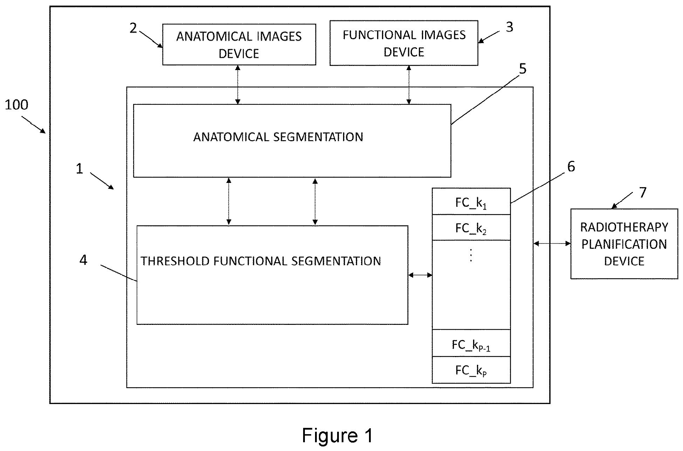

[Fig. 1] is a schematic block diagram illustrating an embodiment of an apparatus according to the present disclosure.

**Fig. 2**

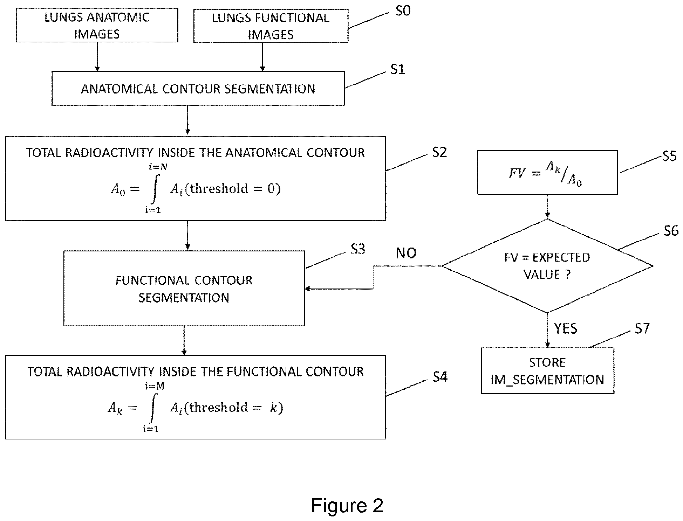

[Fig. 2] is a flowchart illustrating a method of lung functional volumes delineation according to an embodiment.

**Fig. 3**

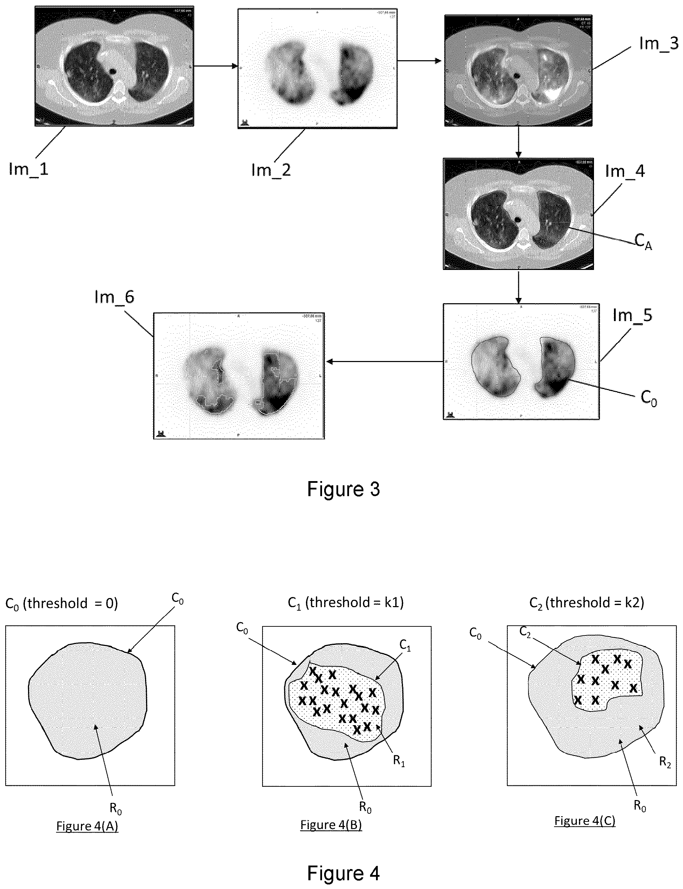

[Fig. 3] illustrates an example of a functional contour with a threshold >0, a threshold = k1 and threshold = k2.

**Fig. 4**

[Fig. 4] illustrates the different images associated with the different steps of the method of the present disclosure.

**Fig. 5**

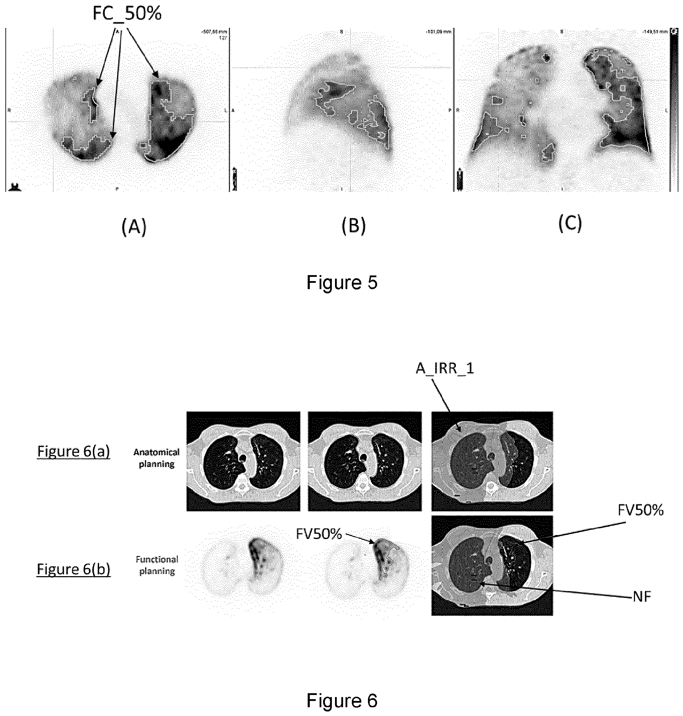

[Fig. 5] shows an example of lung functional volume (FV) delineation wherein the lung functional volume is determined as the minimal volume containing 50% of the total activity within the anatomical volume.

**Fig. 6**

[Fig. 6(a)] illustrates an example of personalized lung SBRT planning based on anatomical (CT) imaging.

[Fig. 6(b)] illustrates an example of personalized lung SBRT planning based on functional imaging by integrating a functional lung volume FV50% constraint to the lung in addition to the standard constraints in SBRT planning.

**Fig. 7**

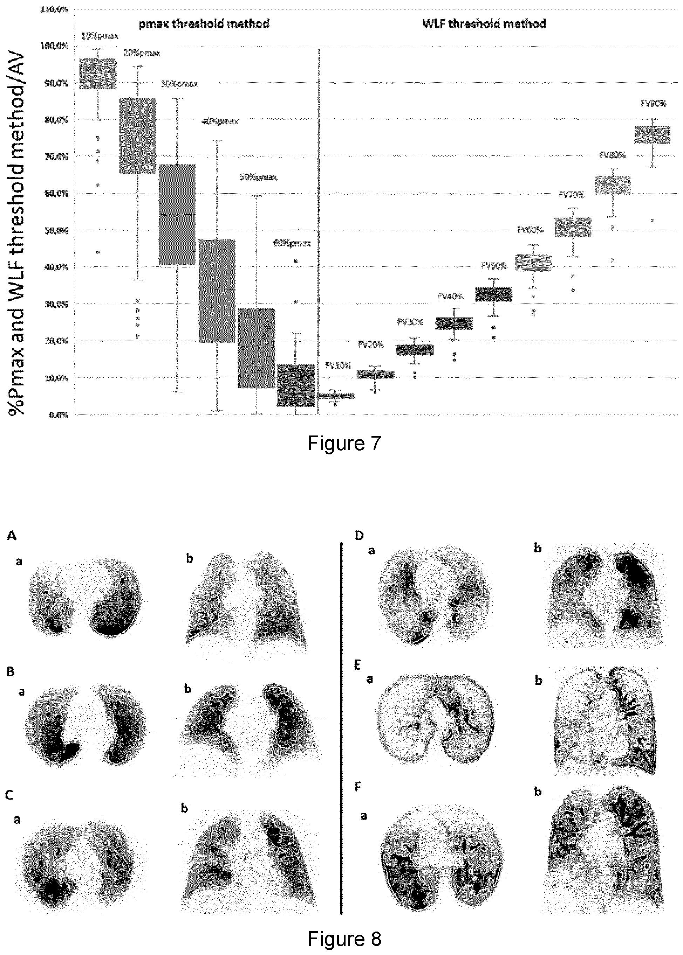

[Fig. 7] illustrates functional volumes (FV) relative to anatomical volume using conventional fixed pixel maximum intensity value (pmax) threshold method and whole lung functional (WLF) threshold method.

**Fig. 8**

[Fig. 8] illustrates examples of lung function volume (FV) delineation wherein the lung functional volume is determined as the minimal volume containing 50% of the total activity within the anatomical volume in axial (a) and coronal (b) section in patients with normal pulmonary function tests (A, B and C) and abnormal pathological pulmonary function tests (D, E and F).

**Fig. 9**

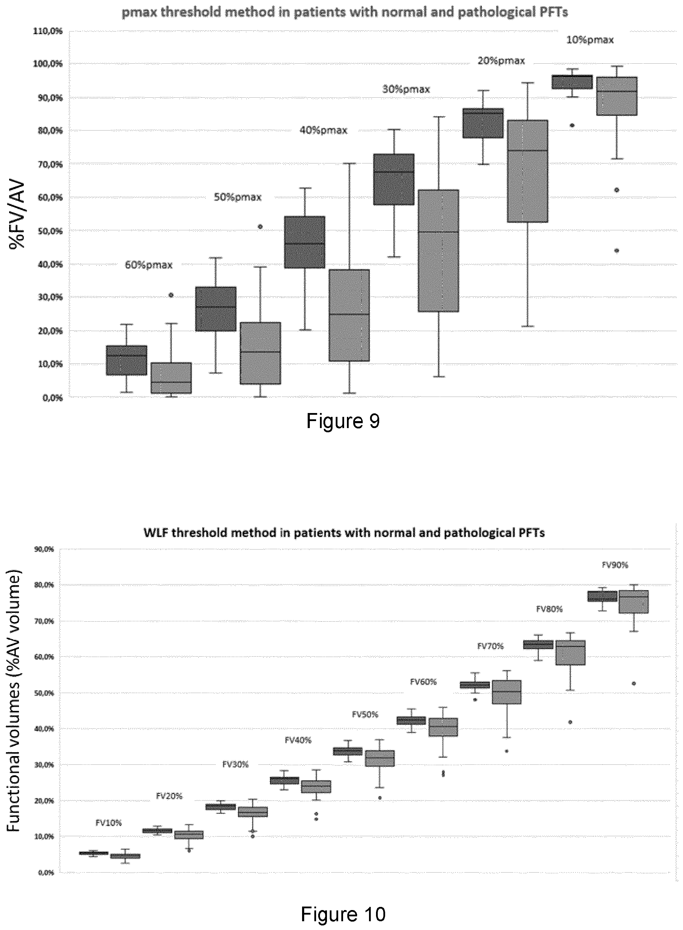

[Fig. 9] illustrates functional volumes relative to anatomical volumes using pmax threshold method in patients with normal pulmonary function test (PFT) and with pre-existing airway disease.

**Fig. 10**

[Fig. 10] illustrates functional volumes relative to anatomical volume using whole lung function (WLF) threshold method in patients with normal PFT and with pre-existing airway disease.

**Description of Embodiments**

In the Figures, the same references denote identical or similar elements.

The following detailed description is done for the case of a 2D images and the term "pixel" of an image represents an element of information in a 2D image.

The present disclosure proposes a method and apparatus for delineating lung functional contours using as a reference for threshold determination the total activity within the lung functional volume. In other words, the lung functional contours are determined as the minimal volume having a radioactivity relative to the total activity within the anatomical volume.

Figure 1 shows a block diagram of a device 1 for delineation of lung functional contours in performing the method according to the present disclosure. Such a device may be implemented on a computer by means of software, for example.

The device 1 may be implemented in an image acquisition apparatus, in particular a medical image acquisition apparatus 100 for processing the instructions according to the method of the present disclosure.

The medical image apparatus 100 may comprise an anatomical image device 2 and a functional image device 3. The medical image apparatus 100 may further comprise a radiotherapy planification device 7 configured to integrate the lungs functional contours obtained by the device 1.

The device 1 comprises a processor for processing computer instructions, a memory for storing the instructions, the images, the patient data, and the lung functional contours.

The device 1 may comprise a data port for communication with a network, for example for exchange of images and/or patient data with a server.

The device 1 may be connected to an anatomical image device 2 for obtaining an anatomical image and a functional image device 3 for obtaining a functional image. The anatomical image obtaining device 2 may be a CT scanner. The functional image device 3 may be a PET scanner or SPECT scanner. Alternatively, the device may be configured for receiving the anatomical images and the functional images via the data port from a server.

The device 1 comprises an anatomical segmentation module 5 and a functional volume segmentation module 4.

The anatomical segmentation module 4 is configured to

- align the anatomical image and the functional image such that both images have corresponding coordinates;
- determine a lung anatomical contour on the anatomical image;
- transfer the lung anatomical contour on the functional image.

The device 1 further comprises a threshold functional segmentation module 4 configured to determine the lung functional contours within the lung anatomical contour identifield in the functional image.

To this end, the functional segmentation module is configured to

- obtain the total radioactivity inside the anatomical contour Co;
- determine a functional contour on the functional image with a threshold k such that all pixels inside said functional contour have a pixel value higher than the threshold;
- obtain the total radioactivity inside the functional contour $A_k$, $A_k$ corresponding to the sum of the radioactive concentration of all pixels inside the functional contour;
- obtain a functional value corresponding to the ratio between the total radioactivity inside the functional contour and the total radioactivity inside the anatomical contour;
- storing the function contour if its functional value has a functional value (FV) expected.

The lung functional contours can be determined in a functional image according to the method illustrated in Figures 2 to 6. The method described below, will be illustrated with reference to a CT anatomical image and a PET functional image, as illustrated in Figure 3. However, it is understood that embodiments of the present disclosure can be applied for other type of anatomical and functional images.

The method comprises step S0 of providing an anatomical image Im_1 and a functional image Im_2.

The anatomical segmentation module 5 is configured for receiving the anatomical image from the anatomical image obtaining device 2 and the functional image from the functional image obtaining device 3. The functional images are used to establish a functional map of an organ. For example, the functional images are used to establish a functional map of the regional ventilation and perfusion in the lungs. An example of lung CT anatomical image Im_1 and an example of lung functional image Im_2 are shown in Figure 3. However, the main disadvantage of functional images is that it does not contain sufficient anatomic delineation. In order to be able to identify the lungs structure on the functional image, the anatomical information provided by the anatomical images such as CT images is imported onto the functional images. Indeed, the CT images provides image contrast between lung tissue and surrounding tissue enabling anatomic lung contour to be more easily delineated. As such, CT also provides a suitable reference standard for the volume measurement of lung functional images.

The method comprises step S1 of determining the lung anatomical contour on the functional image.

In order to transfer the anatomical contour obtained by segmentation on the anatomical image to the functional image, the anatomical image Im_1 and the functional image Im_2 are aligned such that both images have corresponding coordinates. In other words, the anatomical image and the functional image are co-registered such that both images have corresponding pixels. Co-registering of the anatomical image and the functional image may be carried out by any suitable technique. The image Im_3 of Figure 3 represents the result obtained by the alignment between the anatomical image and the functional image.

The lung anatomical contour is either manually delineated in the anatomical image or determined using a semi-automatic segmentation method or a fully automatic segmentation method. For example, the lung contours in CT images are extracted using an automated method based on Hounsfield units to find the two areas representing left and right lung. In addition, the contours may be manually corrected. An example of the lung anatomical contour $C_A$ is marked in the anatomical image Im_4 on Figure 3. The shape of the lung in CT images is represented by a contour drawn along the lung perimeter.

A functional image is an image obtained after intravenous administration of a radiotracer that is accumulated in different concentration in different regions of the lung to visualize functional activities. A radiotracer is a biomolecule injected in low chemical quantities and labelled so that it can be detected by an external device such as a PET scanner or a SPECT scanner. The label is often a radionuclide. The radiotracer may be any tracer known to be able to be images by an imaging device such as PET or SPECT.

The functional image may be obtained by the single photon emission computed tomography technique (SPECT). Similar to the PET technique, the functional images are obtained after intravenous administration of macro-aggregated albumin (MAA) particles which are labeled with Technetium 99m.

Alternatively, the functional images may be obtained after intravenous administration of macro-aggregated albumin (MAA) particles, which embolize in the pulmonary capillaries according to pulmonary blood flow. The particles are radiolabeled with Gallium-68, a $\beta+$ isotope.

The information related to the lung anatomical contour is transferred to the functional image without altering or modifying the intensity levels of the functional images. The lung anatomical contour Co is defined in the functional image Im_5, as indicated in Figure 3.

The method comprises step S2 of obtaining the total radioactivity inside the anatomical contour Co.

In the lung anatomical contour Co, the intensity value of each pixel is estimated. Each pixel of the anatomical image may have an intensity value corresponding to the radioactive concentration of the tracer measured in the pixel. The total radioactivity $A_0$ corresponds to the sum of all pixel intensities within the anatomical contour. In other words, all pixels having a non-zero intensity are counted in the total radioactivity. Thus, $A_0$ corresponds to the total radioactivity calculated within the anatomical contour. The intensity of a pixel is denoted $A_i$ and the total radioactivity is expressed in [Math.1].

[Math.1]

$$A_0 = \int_{i=1}^{i=N} A_i(\text{threshold} = 0)$$

Wherein the number N represents the number of pixels contained in the anatomical contour.

The method comprises step S3 of determining a functional contour on the functional image with a threshold k such that all pixels inside said functional contour have a pixel value higher than the chosen threshold k.

The method comprises step S4 of obtaining the total threshold radioactivity inside the functional contour $A_k$, corresponding to the sum of the radioactive concentration of all pixels inside the functional contour.

The threshold radioactivity $A_k$ corresponds to the sum of all pixel intensities within the threshold contour. In other words, all pixels having a pixel intensity higher than k are counted in the threshold radioactivity $A_k$. Thus, $A_k$ corresponds to the radioactivity calculated within the functional threshold segmented contour. The intensity of a pixel is denoted $A_i$ and the threshold radioactivity is described in [Math.2].

[Math.2]

$$A_k = \int_{i=1}^{i=M} A_i(\text{threshold} = k)$$

Wherein the number M represents the number of pixels contained in the functional threshold contour.

Figures 4A-4C illustrate an example of threshold segmentation process for delineating the functional contour within the anatomical contour on a functional image.

Figure 4A shows a schematic functional image on which a functional contour Co is defined for a threshold k=0. In other words, the pixels contained within the region $R_0$ enclosed by the contour Co have a non-zero value in pixel intensity. Thus, the functional contour Co coincides with the anatomical contour. The total radioactivity $A_0$ of $R_0$ corresponds to the sum of all pixel values within this region.

Figure 4B shows the same image, as shown in figure 4A, comprising the anatomical area enclosed by the contour Co. A functional contour $C_1$ is defined within the anatomical area $R_0$ for a threshold value k = k1. The functional contour $C_1$ is defined within the anatomical contour Co so that the pixels contained within the region $R_1$ enclosed by the contour $C_1$ have a pixel value higher than the chosen threshold value chosen k1. Thus, the region $R_1$ correspond to a threshold segmented volume. The total radioactivity $A_1$ of $R_1$ corresponds to the sum of all pixel values within this threshold segmented volume.

Figure 4C shows the same image, as shown in figure 4A, comprising the anatomical area enclosed by the contour Co. An example of functional contour $C_2$ is defined within the anatomical area $R_0$ for a threshold value k = k2 which is higher than k1 for instance. The functional contour $C_2$ is defined within the anatomical contour Co so that the pixels contained within the region $R_2$ enclosed by the contour $C_2$ have a pixel value higher than the chosen threshold value k2. Thus, the region $R_2$ correspond to a threshold segmented volume. The total radioactivity $A_2$ of $R_2$ corresponds to the sum of all pixel values within this threshold segmented volume.

The threshold k may be a radioactive concentration value defined as a percentage of an intensity reference value measured inside the anatomical contour. For example, the intensity reference value may the maximum intensity value extracted from a single pixel located within the anatomical contour. Alternatively, the intensity reference value may be an average intensity value over all pixels located within the anatomical contour.

The method comprises step S5 of obtaining a functional value corresponding to the ratio between the total radioactivity inside the functional contour and the total radioactivity inside the anatomical contour.

The method comprises step S6 of comparing the obtained functional value to the expected functional value.

The method comprises step S7 of storing the functional contour if its functional value calculated at step S5 has a functional value (FV) expected.

The lung functional contour is selected and stored if the functional value (FV) which is the ratio between the radioactivity $A_k$ calculated within a threshold segmented volume and the total radioactivity $A_0$ within the anatomical contour is equal to an expected functional value.

In the example of Figure 4(B), the functional value $(FV)_{k1}$ corresponds to the ratio between the radioactivity $A_1$ calculated with threshold K1 and the total radioactivity $A_0$. In the case where the calculated functional value $(FV)_{k1}$ is equal to the expected functional value, the functional contour $C_1$ is stored and may be integrated in the radiotherapy planning. In Figure 3, an example of functional contour is shown in the image Im_6. The selected functional contour marked on the image corresponds to a functional value equal to 50%.

In the conventional method, a fixed value threshold is defined. This threshold corresponds to a value relative to the maximum intensity extracted from a single pixel within the anatomical volume. The chosen threshold value may be for instance 10%, 20%, 30%, 40%, 50% and 60% of the maximum intensity. The segmented volume is defined inside the anatomical volume so that the selected pixels values are higher than the fixed threshold.

Instead of using the fixed intensity threshold relative to a single maximum pixel intensity, the method of the present disclosure is to perform a large amount of threshold segmentations iteratively to determine a set of threshold segmented contours on the functional image. For each segmented contour, a functional value (FV) is computed, and the functional contour is stored for the RT planning only if the FV corresponds to the FV expected. Thus, a functional contour is stored only if the FV calculated is equal to the FV expected corresponding to the minimal volume containing the percentage of the total radioactivity within the anatomical volume.

In order to obtain a set of threshold segmented volumes, the step S3 of determining a functional contour on the functional image with a threshold k, the step S4 of obtaining the total radioactivity inside the functional contour and the step S5 of obtaining a functional value corresponding to the ratio between the total radioactivity inside the functional contour and the total radioactivity inside the anatomical contour are repeated by varying iteratively the threshold k.

A number Nsv of functional contours are computed. Based on these calculated segmented contours, a set of functional contours are selected and stored. For instance, these selected functional contours are stored in a memory 6 in the device 1, as illustrated in Figure 1. Each selected functional contour (FC_$k_1$, FC_$k_2$ ... FC_$k_{P-1}$, FC_kp) is associated with a threshold value and an expected functional value. These selected functional contours are transmitted to the RT planification device to be integrated in the RT planning. For instance, the steps S3, S4 and S5 may be repeated by varying iteratively the threshold from 5% to 95% and the step between two successive iterations may be comprised between 0.01 and 0.5. For instance, the set of functional contours are determined for expected functional values from 10% to 90%.

Figure 5 illustrate an example of lung functional contours RC_50% with an expected functional value equal to 50%, in axial (A), coronal (B) and sagittal section (C) in a patient. The lung functional contour is determined as the minimal volume containing 50% of the total activity within the anatomical volume. The functional volume calculated with the functional value FV50% is the minimal volume within the lungs which contains 50% of total activity, while the functional volume calculated with a threshold equal to 50% of the maximum intensity within the anatomical volume has no particular significance.

Figure 6 illustrates an example of integration of the function contours in lung stereotactic body radiation therapy (SBRT) to spare identified functional areas.

Figure 6(A) shows an example of the conventional anatomical planning based on CT imaging. Figure 6(B) shows an example of the functional planning based on PET/CT imaging. The functional contour corresponding to a functional value FV50% is integrated in the RT planning, indicating that the irradiation area A_IRR_1 defined by the conventional anatomical planning includes highly functional lung volumes in the left upper lobe, as illustrated in Figure 6(A). Thus, by incorporating the lung functional contour constraint to the anatomical lung planning in addition to the standard constraints in SBRT planning, it is possible to spare this highly functional region in the left upper lobe, to the detriment of the right lobe which is a non-functional region NF. This optimized SBRT planning allows a decrease of the irradiation dose in the functional region enclosed in the determined functional contour. Thus, a better sparing of the pulmonary functional areas could lead to limit the risks of toxicities of the irradiations, while covering the target area.

A comparative study has been carried out to evaluate the efficiency of the method according to the present disclosure for delineating the functional contours based on the total activity within the lungs.

Figures 7 to 10 illustrates results obtained of the study.

**PET/CT perfusion protocol**

60 patients underwent a lung perfusion PET/CT scan on a digital Biograph vision 600 PET/CT (Siemens Healthineers, Knoxville, TN, United States), immediately after intravenous administration of approximately 50MBq of 68Ga-MAA. Each acquisition consisted of firstly, a low dose CT (120kV, 10 mAs, pitch 1, 2mm slices, FOV 780mm) followed by a PET acquisition (motion mode 1.9 mm.s-$_1$, total acquisition time about 5 minutes).

**Pulmonary function tests (PFTs)**

Patients underwent PFTs including spirometry, plethysmography and DLCO. Patients were categorised as having lung disease if they presented with chronic obstructive pulmonary disease (COPD) with FEV1/FVC < 0,7 according to GOLD classification, or a diffusion disorder with DLCO < 60%. Among the 60 patient, 48 patients had PFTs, 31 (65%) had pre-existing lung disease.

**Lung functional contours delineation**

The CT and PET images were acquired and processed to delineate the whole lung anatomical volume on PET images according to the following steps:

(a) aligning the anatomical image and the functional image such that both images have corresponding coordinates;
(b) determining a lung anatomical contour on the anatomical image;
(c) transferring the lung anatomical contour on the functional image.

The lung functional contours were then delineated within the anatomical contour on the PET images using two methods: the conventional method based on a fixed threshold relative to the maximum pixel value extracted from one single pixel within the anatomical volume (Pmax threshold method) and the method according to the present invention based on the activity of the minimal lung functional threshold segmented volume relative to the total activity within the anatomical volume (Whole lung functional method). For both methods, lung functional volumes were computed and expressed in terms of percentage of the anatomical lung volume and of percentage of the total lung activity. Functional volumes were compared for patients with normal PFTs and pre-existing airway disease. The functional contours were displayed on the functional images.

**Conventional method (Pmax threshold method)**

At first, a fixed value threshold is defined. This threshold corresponds to a relative value of the maximum intensity extracted from a single pixel within the anatomical volume (AV). The chosen threshold value used in this study were 10%, 20%, 30%, 40%, 50% and 60% of the maximum intensity (X%pmax). The lung functional volume is defined inside the anatomical volume so that the selected pixels values are higher than the fixed threshold. The results of each segmented volume are expressed in terms of volume relative to the anatomical volume (% of the AV) and radioactivity relative to the total radioactivity in the anatomical volume (% of the total activity within the AV).

**Whole lung functional method (WLF method)**

The functional images were processes according to the method of the present invention according to the following steps:

(d) obtaining the total radioactivity inside the lung anatomical contour "$A_0$";
(e) determining a functional contour on the functional image with a threshold k such that all pixels inside said functional contour have a pixel value higher than the threshold;

(f) obtaining the total radioactivity inside the functional contour "$A_k$";

(g) obtaining a functional value corresponding to the ratio between the total radioactivity inside the functional contour and the total radioactivity inside the anatomical contour;

(h) storing the function contour if its functional value has a functional value (FV) expected.

To obtain the minimal lung functional threshold segmented volume, the key step of this new method consists in performing a large amount of segmentation by repeating the steps (e), (f) and (g) and by varying iteratively the threshold k from 5% to 95% with 0.1% steps. In this study, the functional contours are determined for expected functional values from 10% to 90% with 10 % steps. Results were expressed in terms of volume (%of the AV).

## Results and discussion

The distribution of functional volumes computed with the conventional method and the distribution of functional volumes computed with the method according to the present invention are shown in Table 1 and Figure 7 which shows functional volumes relative to the anatomical volume using the conventional method (left of Figure 7) and the whole lung functional threshold method (right of Figure 7).

[Table 1]

| pmax threshold method | | |
|---|---|---|
| | **volume (% of the AV) Median (IQ)** | **Activity (% of total activity in the AV) Median (IQ)** |
| 10%pmax | 93.7 (87.9-96.3) | 989 (97.4-99.4) |
| 20%pmax | 78.2 (60.3-85.8) | 91.2 (85.5-95.2) |
| 30%pmax | 53.4 (36.3-67.7) | 74.8 (61.0-84.0) |
| 40%pmax | 34.0 (17.9-47.3) | 54.9 (32.2-66.9) |
| 50%pmax | 17.1 (6.6-28.5) | 31.8 (13.3-45.3) |
| 60%pmax | 6.3 (1.8-13.3) | 13.8 (5.2-24.3) |
| **WLF threshold method** | | |
| | **Volume (% of the AV) Median (IQ)** | **Corresponding pmax threshold Median (IQ)** |
| FV10% | 5.0 (4.4-5,5) | 0.6 (0.5-0.7) |
| FV20% | 10.9 (9.6-11.9) | 0.6 (0.5-0.6) |
| FV30% | 17.6 (15.9-18.8) | 0.5 (0.4-0.6) |
| FV40% | 24.4 (22.7-26.3) | 0.5 (0.4-0.6) |
| FV50% | 32.6 (30.4-34.3) | 0.4 (0.3-0.5) |

In Table 1, lung functional volumes are expressed in percentage of the anatomical volume (AV) and in percentage of the total activity in the AV for the conventional method. The median (IQ) volumes were 93.7% (87.9-96.3) for 10%pmax, 78.2% (60.3-85.8) for 20%pmax, 53.4% (36.3-67.7) for 30%pmax, 34.0% (17.9-47.3) for 40%pmax, 17.1% (6.6-28.5) for 50%pmax and 6.3% (1.8-13.3) for 60%pmax, respectively. The correspondence with the % of whole lung activity is displayed in Table 1.

Lung functional volumes are expressed in percentage of the AV and the corresponding pmax threshold for each expected functional value (FV%) for the method of the present invention. The median (IQ) volumes were 5.0% (4.4-5.5) for FV10%, 10.9% (9.6-11.9) for FV20%, 17.6% (15.9-18. 8) for FV30%, 24.4% (22.7-26.3) for FV40%, 32.6% (30.4-34.3) for FV50%, 41.7% (38.9-43.2) for FV60%, 52.0% (48.1-53.4) for FV70%, 62.8% (59.1-64.7) for FV80% and 76.1% (73.3-78.2) for FV90%, respectively. The correspondence with the pmax threshold values is presented in Table 1.

Figure 8 illustrates the spatial distribution of functional contours obtained with an expected functional value equal to 50% (FV50%) in axial (a) and coronal section (b) in patients with normal (A, B and C) and abnormal (D, E and F) PFTs.

The distribution of functional volumes computed with the pmax threshold method in patients with and without lung disease is displayed in Figure 9. Similarly, the distribution of functional volumes using the whole lung functional method is displayed in Figure 10.

This comparative study shows that the conventional threshold method provides a wide distribution in the size of functional volumes whereas the method of the present invention provides much more consistent and reliable results between patients with lower dispersion of functional volumes. Thus, the median (IQ) and extrema of the FV50% in patients without lung disease was 33.8% (32.6-34.9), 27.8% and 38.5% of the AV respectively. However, while the size of the FV was close between patients, the spatial distribution was variable from one patient to another, as illustrated on Figure 8.

This study shows that the method of the present disclosure may be used as a reliable, robust tool for delineating lungs functional contours. These lung functional contours data may be integrated in a RT planning as a supplementary constraint for better prioritizing non-functional pulmonary regions for irradiation while sparing functional regions.

**Claims**

1. Method for delineating lung functional contours on functional images comprising :

    (a) aligning an anatomical image and a functional image such that both images have corresponding coordinates;
    (b) determining a lung anatomical contour on the anatomical image;
    (c) transferring the lung anatomical contour on the functional image;
    (d) obtaining the total radioactivity inside the lung anatomical contour "$A_0$";
    (e) determining a functional contour on the functional image with a threshold k such that all pixels inside said functional contour have a pixel value higher than the threshold;
    (f) obtaining the total radioactivity inside the functional contour "$A_k$";
    (g) obtaining a functional value corresponding to the ratio between the total radioactivity inside the functional contour and the total radioactivity inside the anatomical contour;
    (h) storing the function contour if its functional value has a functional value (FV) expected.

2. Method according to claim 1, wherein the threshold k is a radioactive concentration value defined as a percentage of an intensity reference value measured inside the anatomical contour.

3. Method according to claim 2, wherein the intensity reference value is the maximum intensity value extracted from a single pixel located within the anatomical contour.

4. Method according to claim 2, wherein the intensity reference value is an average intensity value over all pixels located within the anatomical contour.

5. Method according to any one of claims 1 to 4, wherein the steps (e), (f) and (g) are repeated by varying iteratively the threshold from 5% to 95%.

6. Method according to any one of claims 1 to 5, wherein the functional contours are determined for expected functional values from 10% to 90%.

7. Method according to any one of claims 1 to 6, wherein the anatomical image is a computer tomography image.

8. Method according to any one of claims 1 to 7, wherein the functional image is a single photon emission computed tomography image or a positron emission tomography image.

9. Method according to any one of claims 1 to 8, wherein the step (c) comprises a step of semi-automatic or automatic segmentation to determine the anatomical contour on the anatomical image.

10. Device (1) for delineating lungs functional volumes on a functional image, the device comprising:

    an anatomical segmentation module (5) adapted to:

        - align an anatomical image and a functional image such that both images have corresponding coordinates;
        - determine a lung anatomical contour on the anatomical image;
        - transfer the lung anatomical contour on the functional image;

    a functional segmentation module (4) adapted to

- obtain the total radioactivity inside the anatomical contour $A_0$;
- determine a functional contour on the functional image with a threshold k such that all pixels inside said functional contour have a pixel value higher than the threshold;
- obtain the total radioactivity inside the functional contour $A_k$;
- obtain a functional value corresponding to the ratio between the total radioactivity inside the functional contour and the total radioactivity inside the anatomical contour;
- storing the function contour if its functional value has a functional value (FV) expected.

11. Device according to claim 10, wherein the threshold k is a radioactive concentration value defined as a percentage of an intensity reference value measured inside the anatomical contour, preferably the intensity reference value being the maximum intensity value extracted from a single pixel located within the anatomical contour, or an average intensity value over all pixels located within the anatomical contour.

12. Medical image apparatus (100), comprising an anatomical image device (2), a functional image device (3) and the device for delineating lungs functional volumes according to any one of claims 1 to 11.

13. Medical image apparatus according to claim 12, further comprises a radiotherapy planification device (7) configured to integrate the lungs functional contours transmitted by the device (1) for integrating lungs functional volumes in the radiotherapy planning.

14. Computer software comprising instructions to implement a method according to one of claims 1 to 9 when the software is executed by a processor.

15. Computer-readable non-transient recording medium on which a software is registered to implement a method according to one of claims 1 to 9 when the software is executed by a processor.

Figure 1

LUNGS ANATOMIC IMAGES

LUNGS FUNCTIONAL IMAGES — S0

ANATOMICAL CONTOUR SEGMENTATION — S1

TOTAL RADIOACTIVITY INSIDE THE ANATOMICAL CONTOUR — S2

$$A_0 = \int_{i=1}^{i=N} A_i(\text{threshold} = 0)$$

FUNCTIONAL CONTOUR SEGMENTATION — S3

TOTAL RADIOACTIVITY INSIDE THE FUNCTIONAL CONTOUR — S4

$$A_k = \int_{i=1}^{i=M} A_i(\text{threshold} = k)$$

$$FV = {A_k}/{A_0}$$ — S5

FV = EXPECTED VALUE ? — S6

NO

YES — S7

STORE IM_SEGMENTATION

Figure 2

Im_1    Im_2    Im_3    Im_4    C_A    Im_5    C_0    Im_6

Figure 3

$C_0$ (threshold = 0)    $C_0$    $C_1$ (threshold = k1)    $C_0$    $C_1$    $R_1$    $R_0$    $C_2$ (threshold = k2)    $C_0$    $C_2$    $R_2$    $R_0$    $R_0$

Figure 4(A)    Figure 4(B)    Figure 4(C)

Figure 4

FC_50%

(A)　　　　　　　　(B)　　　　　　　　(C)

Figure 5

A_IRR_1

Figure 6(a)　Anatomical planning

Figure 6(b)　Functional planning

FV50%

FV50%

NF

Figure 6

Figure 7

Figure 8

Figure 9

Figure 10

Europäisches
Patentamt

European
Patent Office

Office européen
des brevets

**EUROPEAN SEARCH REPORT**

Application Number

EP 23 15 8293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PIERRE-YVES LE ROUX ET AL: "Automatic delineation of functional lung volumes with Ga-ventilation/perfusion PET/CT", EJNMMI RESEARCH, BIOMED CENTRAL LTD, LONDON, UK, vol. 7, no. 1, 10 October 2017 (2017-10-10), pages 1-7, XP021249892, DOI: 10.1186/S13550-017-0332-X * abstract * * Section Methods; figure 1 * * Section Discussion * ----- | 1-15 | INV. G06T7/12 G06T7/174 G06T7/136 G06T7/11 |
| A | MCINTOSH LACHLAN ET AL: "Automated assessment of functional lung imaging with 68Ga-ventilation/perfusion PET/CT using iterative histogram analysis", EJNMMI PHYSICS, vol. 8, no. 1, 1 December 2021 (2021-12-01), XP093066617, DOI: 10.1186/s40658-021-00375-6 Retrieved from the Internet: URL:https://link.springer.com/content/pdf/10.1186/s40658-021-00375-6.pdf?pdf=button> * abstract * * Section Introduction * * Section Methods; figure 1 * ----- -/-- | 1-15 | TECHNICAL FIELDS SEARCHED (IPC) G06T |

The present search report has been drawn up for all claims

| Place of search | Date of completion of the search | Examiner |
|---|---|---|
| Munich | 26 July 2023 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 23 15 8293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SIVA SHANKAR ET AL: "Ga-68 MAA Perfusion 4D-PET/CT Scanning Allows for Functional Lung Avoidance Using Conformal Radiation Therapy Planning", TECHNOLOGY IN CANCER RESEARCH AND TREATMENT, vol. 15, no. 1, 9 February 2016 (2016-02-09), pages 114-121, XP093066099, US ISSN: 1533-0346, DOI: 10.1177/1533034614565534 Retrieved from the Internet: URL:http://journals.sagepub.com/doi/full-xml/10.1177/1533034614565534> * abstract * | 1-15 | |
| A | US 2009/212225 A1 (ZHENG YIRAN [US] ET AL) 27 August 2009 (2009-08-27) * abstract * * figure 2 * * paragraph [0001] – paragraph [0005] * * paragraph [0015] – paragraph [0016] * | 1-14 | |
| | | | TECHNICAL FIELDS SEARCHED (IPC) |

The present search report has been drawn up for all claims

| Place of search | Date of completion of the search | Examiner |
|---|---|---|
| Munich | 26 July 2023 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 8293

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2023

| Patent document cited in search report | Publication date | Patent family member(s) | Publication date |
|---|---|---|---|
| US 2009212225 A1 | 27-08-2009 | NONE | |

For more details about this annex : see Official Journal of the European Patent Office, No. 12/82

EPO FORM P0459